(19) **Europäisches Patentamt / European Patent Office / Office européen des brevets**

(11) **EP 1 752 331 B1**

(12) **EUROPEAN PATENT SPECIFICATION**

(45) Date of publication and mention
of the grant of the patent:
**25.06.2008 Bulletin 2008/26**

(51) Int Cl.:
***B60K 28/16*** (2006.01)   ***B60W 30/18*** (2006.01)
*B60W 10/02* (2006.01)   *B60W 10/06* (2006.01)

(21) Application number: **06015611.4**

(22) Date of filing: **26.07.2006**

(54) **Vehicular control system**

Fahrzeugsteuerungssystem

Système de contrôle pour un véhicule

(84) Designated Contracting States:
**DE GB**

(30) Priority: **08.08.2005 JP 2005229271**

(43) Date of publication of application:
**14.02.2007 Bulletin 2007/07**

(73) Proprietor: **HONDA MOTOR CO., LTD.
Tokyo 107-8556 (JP)**

(72) Inventors:
• **Honda, Shigehiro
 Wako-shi,
 Saitama 351-0193 (JP)**
• **Yanagida, Hisanori
 Wako-shi,
 Saitama 351-0193 (JP)**

• **Takemori, Yuichiro
 Wako-shi,
 Saitama 351-0193 (JP)**
• **Kurata, Takeshi
 Wako-shi,
 Saitama 351-0193 (JP)**

(74) Representative: **Rupp, Christian et al
Mitscherlich & Partner
Patent- und Rechtsanwälte
Sonnenstrasse 33
80331 München (DE)**

(56) References cited:
EP-A2- 1 093 986   EP-A2- 1 270 305
DE-A1- 19 711 719   US-A- 5 303 794
US-A- 5 431 242   US-A1- 2004 059 493

## Description

The present invention relates generally to a vehicular control system equipped with traction control means, which adjusts the power of the engine and performs a slip-reducing control for the driving wheels.

There has been known a vehicle equipped with traction control means, which adjusts the power and the rotational speed of the engine when the vehicle experiences a slip at start-up on a snow-covered road, and which controls to reduce the power being transmitted to the driving wheels for eliminating the slippage of the driving wheels (for example, refer to Japanese Laid-Open Patent Publication No. H10(1998)-96467). The traction control means begins to execute an operation when it detects a slip at the driving wheels. After it has started the traction-controlling operation, it controls the power of the engine in relation to the detected condition or the slippage at the driving wheels as feedback.

Patent document EP 1 270 305 A2 which includes the features of the preamble of claim 1, relates to a driving force controlling apparatus and method for a four-wheel drive vehicle in which a front-and-rear road wheel driving force distribution control system, which variably controls a distribution ratio of a front-and-rear road wheel driving force according to an engagement control of a friction clutch, is mounted. If large front-and-rear road wheel velocity difference is developed, e.g. during a low $\mu$ road, the traction control system is activated and the frictional clutch is engaged so that the vehicle is in the directly coupled 4WD drive state in which no slip on frictional clutch is absent, that is the front-and-rear road wheel distribution rate is 50% : 50%.

In addition, there is a well-known vehicle design that includes a starting clutch, which is a hydraulic clutch provided in the power transmission mechanism that transmits power from the engine to the drivingwheels. In this case, the vehicle is provided with clutch control means that controls the hydraulic pressure applied to the starting clutch on the basis of, for example, the rotational speed of the engine, as a parameter, so that the engaging force of the starting clutch is controlled correspondingly to the condition of the vehicle (for example, refer to Japanese Laid-Open Patent Publication No. H9(1997)-72353).

Conventionally, in a vehicle that is equipped with the above mentioned traction control means and a starting clutch whose engaging force is controllable for transmission of the power to the driving wheels, the operation by the traction control means for controlling the power of the engine and the operation by the clutch control means for controlling the engaging of the starting clutch are executed independently from each other. As a result, even though the power of the engine is adjusted by the traction control means appropriately for a skid occurring at the driving wheels, the power that corresponds to the engaging force of the starting clutch, which is controlled independently, is transmitted differently to the driving wheels. This situation presents a problem that it is difficult to control the power reliably for eliminating the slippage.

Furthermore, in a case where the clutch control means is designed for controlling the engaging force of the clutch in relation to the power and the rotational speed of the engine, if the power of the engine is reduced by the traction control means in engine-power control, then the resultant power and rotational speed of the engine are referred to in the engagement control of the starting clutch for varying the engaging force of the starting clutch. Because of this reason, there has been a problem of difficulty in the transmission of a targeted power to the driving wheels even though the power of the engine is controlled by the traction control means.

To solve this problem, it is an object of the present invention to provide a vehicular control system that reliably minimizes the slippage at the driving wheels for a vehicle equipped with the above mentioned traction control means and the starting clutch, whose engaging force is controllable.

For achieving the above objectives, a vehicular control system according to the present invention comprises an engine, a starting clutch, clutch control means, and traction control means. The starting clutch is provided between the engine and the driving wheels and is brought into engagement or disengagement, and the clutch control means adjusts the engaging force of the starting clutch in correspondence to the condition of the vehicle for controlling the ratio of the power transmission from the engine to the driving wheels. The traction control means, if there is a slip at the driving wheels, executes control operations for reducing the slippage by adjusting the power of the engine. In the control system, the clutch control means executes a control for setting the engaging force of the starting clutch larger while the traction control means is controlling the power of the engine than while it is not controlling the power of the engine.

In the vehicular control system, preferably, the control for setting the engaging force of the starting clutch larger by the clutch control means be executed if the rotational speed of the engine is equal to or higher than a predetermined rotational speed (for example, the first rotational speed Ne1 described in the following embodiment) or higher.

According to the vehicular control system, which is constructed as described above, while the power of the engine is being controlled by the traction control means, the engaging force of the starting clutch is made larger than while the power of the engine is not being controlled. In contrast with an embodiment according to a prior art, the transmission ratio of the power of the engine, which is adjusted by the traction control means, to the driving wheels is made higher in the present invention. In this condition, the power of the engine is controlled to accurately control the power being transmitted to the driving wheels, thereby reliably eliminating the slippage.

Furthermore, this control is executed while the engine rotational speed is equal to or higher than a predetermined rotational speed inclusive. In this way, protection is provided against an engine stall, which may otherwise occur while the engaging force of the starting clutch is comparatively large with the engine rotational speed being in a low rotational speed region.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

The present invention will become more fully understood from the detailed description given herein below and the accompanying drawings which are given by way of illustration only and thus are not limitative of the present invention.

FIG. 1 is a schematic diagram showing the construction of the power transmission of a four wheel vehicle, to which a vehicular control system according to the present invention is applied.

FIG. 2 is a flowchart showing some steps of an engaging control of the starting clutch executed by a clutch control unit.

FIG. 3 is a graph plotting coefficients of torque-capacity.

FIG. 4 is a graph plotting coefficients for correction.

FIG. 5 is a timing chart showing the result of an engine-power control executed by a traction-controller during a start-up of a vehicle in an embodiment according to the present invention.

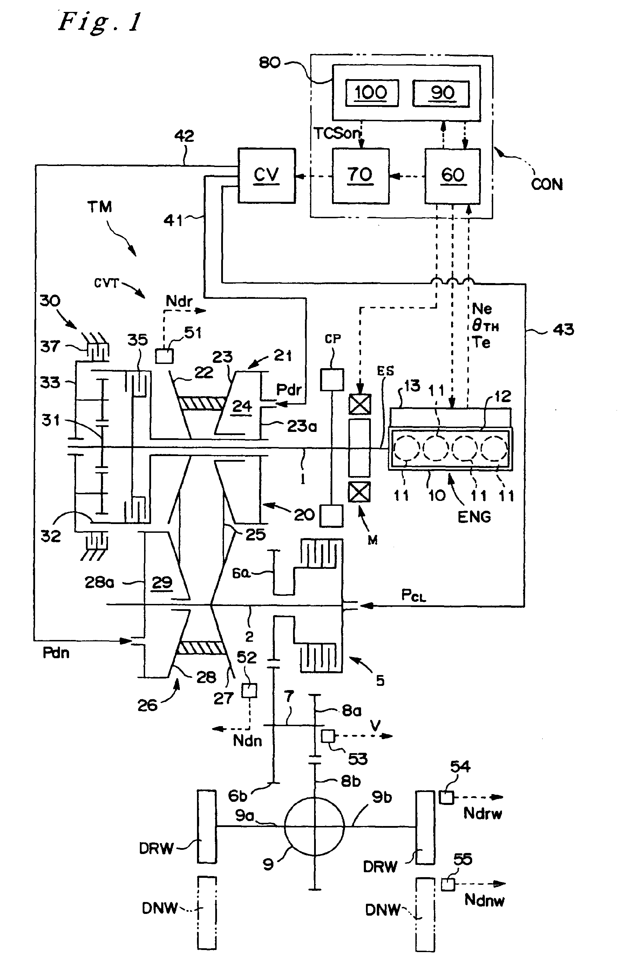

Now, a preferred embodiment according to the present invention is described in reference to the drawings. FIG. 1 shows the power transmission TM of a four wheel vehicle, to which a vehicular control system according to the present invention is applied. The power transmission TM comprises an engine ENG, an electrical motor M, which is provided on the output shaft Es of the engine ENG, and a continuously variable transmission CVT, which is coupled through a coupling mechanism CP to the output shaft Es. The driving force of the engine ENG is transmitted to the driving wheels DRW, propelling the vehicle on the four wheels, which are two driving wheels DRW and two driven wheels DNW.

The engine ENG is a four cylinder reciprocal engine and includes a cylinder block 10 with four cylinder bores 11, in which pistons are provided, respectively. The engine ENG is equipped with a suction and exhaust controller 12, which controls the operation of suction and exhaust for each cylinder bore 11, and equipped also with a fuel injection and ignition controller 13, which controls the operation of fuel injection and ignition for each cylinder bore 11. The suction and exhaust controller 12 has a throttle valve (not shown), whose operation is controlled electrically by a traction control unit 100, which is described below. The opening θth of the throttle valve is adjusted for adjusting the power of the engine ENG.

The electrical motor M assists the driving force of the engine ENG when the electrical motor is powered by a battery incorporated in the vehicle, and the electrical motor M charges the battery by generating electricity from the rotational drive received from the wheel side while the vehicle is in deceleration (energy recovery). Thus, the drive source of this power transmission TM comprises the engine ENG and the electrical motor M, and it is of a hybrid type.

The continuously variable transmission CVT comprises a metal V-belt mechanism 20, a forward/reverse switching mechanism 30 and a starting clutch 5. The metal V-belt mechanism 20 is disposed rotationally between the input shaft 1 and the countershaft 2 of the transmission, the forward/reverse switching mechanism 20 is disposed on the input shaft 1, and the starting clutch 5 is disposed on the countershaft2. This continuously variable transmission CVT is mounted in the vehicle such that the input shaft 1 is connected through the above mentioned coupling mechanism CP to the output shaft Es of the engine ENG. Therefore, the driving force is transmitted through the starting clutch 5 to a differential mechanism 9 and then through right and left axle shafts 9b and 9a to the right and left driving wheels DRW.

The metal V-belt mechanism 20 comprises a drive pulley 21, which is disposed over the input shaft 1, a driven pulley 26, which is disposed on the countershaft 2, and a metal V-belt 25, which is disposed around these pulleys 21 and 26.

The drive pulley 21 comprises a stationary pulley half 22 and a movable pulley half 23. The stationary pulley half 22 is fixed on a ring gear 32, which is provided in the forward/reverse switching mechanism 30, but is rotatable with respect to the input shaft 1. The movable pulley half 23 is provided movable axially with respect to the stationary pulley half 22. In the outward side of the movable pulley half 23, a drive-pulley cylinder chamber 24 is defined by a cylinder wall 23a, so the pressure being supplied from a control valve CV through an oil passage 41 into the cylinder chamber 24 shifts the movable pulley half 23 axially. This pressure is referred to as "drive pulley regulating pressure Pdr". The driven pulley 26 comprises a stationary pulley half 27, which is fixed on the countershaft 2, and a movable pulley half 28, which is movable axially with respect to the stationary pulley half 27. In the outward side of the movable pulley half 28, a driven-pulley cylinder chamber 29 is defined by a cylinder wall 28a, so the pressure being supplied from the control valve CV through an oil passage 42 into the cylinder chamber 29 shifts the movable pulley half 28 axially. This pressure is referred to as "driven pulley regulating pressure Pdn". The drive and driven pulley regulating pressures Pdr and Pdn are controlled by the control valve CV, so that the groove widths of the drive and driven pulleys 21 and 26 are adjusted appropriately for establishing the pitch radii of the respective pulleys for the metal V-belt 25 under the control of continuous speed ratio change.

Furthermore, the forward/reverse switching mechanism 30 is a planetary gear train, which comprises a sun gear 31, a ring gear 32, a carrier 33 and a forward drive clutch 35. The sun gear 31 is connected to the input shaft 1, and the ring gear 32 is connected to the stationary pulley half 22 of the drive pulley 21. The carrier 33 can be held stationary against rotation by a reverse brake 37, and the forward drive clutch 35 can be actuated to connect and unify the sun gear 31 and the ring gear 32. In this mechanism 30, while the forward drive clutch 35 is in engagement, all the gears 31, 32 and 33 rotate together with the input shaft 1 as one body, and the drive pulley 21 is driven by the driving force of the engine ENG in the same direction as the input shaft 1 (i.e., in the forward direction of the vehicle). On the other hand, while the reverse brake 37 is in engagement, the carrier 33 is held stationary, so the ring gear 32 rotates in the direction opposite to that of the sun gear 31, and the drive pulley 21 is driven by the driving force of the engine ENG in the direction opposite to that of the input shaft 1 (i.e., in the reverse direction).

The starting clutch 5 is a hydraulic clutch that controls the power transmission between the countershaft 2 and the following train of power transmission gears 6 ~ 8. The power from the countershaft 2 is transmitted to the power transmission gear train 6 ~ 8 correspondingly to the engaging condition (engaging force) of the starting clutch 5. While the starting clutch 5 is in engagement, the power of the engine ENG, whose rotational speed has undergone the speed ratio change by the metal V-belt mechanism 20, is transmitted through the power transmission gear train 6 ~ 8 to the differential mechanism 9. Then, the power is divided and transmitted by the differential mechanism 9 through the right and left axle shafts 9b and 9a to the right and left driving wheels DRW. While the starting clutch 5 is in disengagement, such power transmission is not possible.

In the continuously variable transmission CVT, the pulley regulating pressures Pdr and Pdn being supplied from the control valve CV through the oil passages 41 and 42, respectively, are used for controlling the speed ratio change while the forward or rearward drive control pressure being supplied from the control valve CV through an oil passage (not shown) to the forward drive clutch 35 or to the reverse brake 37 is used for controlling the forward/reverse switching. Furthermore, the clutch control pressure PCL being supplied through an oil passage 43 is used for controlling the engagement of the starting clutch 5. The control valve CV itself comprises electromagnetically controlled valves, each of which comprises a solenoid, whose operation is controllable by a magnetizing signal.

In the power transmission TM, various sensors are provided for detecting the conditions of the vehicle. For example, as shown in FIG. 1, a drive pulley rotational speed sensor 51 is provided in the proximity of the drive pulley 21 for detecting the rotational speed Ndr of the drive pulley 21; a driven pulley rotational speed sensor 52 is provided in the proximity of the driven pulley 26 for detecting the rotational speed Ndn of the driven pulley 26; a vehicle speed sensor 53 is provided in the proximity of an idler shaft 7, which constitutes the power transmission gear train, for detecting the vehicle speed V; a drive wheel rotational speed sensor 54 is provided in the proximity of a driving wheel DRW for detecting the rotational speed Ndrw of the driving wheel DRW; and a driven wheel rotational speed sensor 55 is provided in the proximity of a driven wheel DNW for detecting the rotational speed Ndnw of the driven wheel DNW.

Furthermore, the vehicle is equipped with a control system CON, which electrically controls the engine ENG and the continuously variable transmission CVT. The control system CON comprises an engine control unit 60, a clutch control unit 70, and a vehicle stability assist control unit (hereinafter referred to as "VSA control unit") 80. The engine control unit 60 controls the operations of the engine ENG and the electrical motor M. The clutch control unit 70 controls the operation of the control valve CV for adjusting the hydraulic pressures being supplied to the hydraulic actuators of the starting clutch and the like that constitute the continuously variable transmission CVT. The VSA control unit 80, which is for controlling the vehicle to travel stably, comprises an ABS control unit 90, which adjusts the hydraulic pressure applied to the brakes of the wheels for preventing the wheels from being locked during the braking operation, and a traction control unit 100, which adjusts the power to be transmitted to the driving wheels DRW for preventing the driving wheels DRW from slipping during the start-up operation of the vehicle.

The engine control unit 60 calculates a value for each of the engine power Te, the engine rotational speed Ne, and the opening θth of the throttle valve on the basis of the detection signals received from the sensors provided at appropriate parts of the engine ENG, and the engine control unit 60 controls the power of the engine by outputting control signals for adjusting the opening θth of the throttle valve. Furthermore, the engine control unit 60 executes driving force assist control in which the engine control unit 60 controls the operation of the electrical motor M for achieving additional driving force by outputting control signals to the electrical motor M.

The clutch control unit 70 receives values for the engine power Te, the engine rotational speed Ne, and the throttle opening θth from the engine control unit 60 and also receives detection signals from the drive pulley rotational speed sensor 51 for the rotational speed Ndr of the drive pulley 21, detection signals from the driven pulley rotational speed sensor 52 for the rotational speed Ndn of the driven pulley 26, and detection signals from the vehicle speed sensor 53 for the vehicle speed V.

The clutch control unit 70 calculates the clutch control pressure PCL from each value input and controls the operation of the control valve CV by outputting magnetizing signals to the control valve CV such that the calculated clutch control pressure PCL is supplied to the starting clutch 5. This operation controls the ratio of the power being transmitted from the engine ENG to the driving wheels DRW. By the way, the clutch control unit 70 is equipped with memory means, where a map used for the calculation of the clutch control pressure PCL is stored.

The VSA control unit 80 receives a value for each of the engine power Te, the engine rotational speed Ne, and the throttle opening θth from the engine control unit 60 and detection signals for the rotational speed Ndrw and the rotational speed Ndnw of the driving wheels DRW and the driven wheels DNW, respectively, from the above mentioned rotational speed sensors 54 and 55.

The traction control unit 100, which constitutes the VSA control unit 80, calculates the slip ratio of the driving wheels DRW on the basis of these detection signals and determines from the calculated slip ratio whether there is really a slip at the driving wheels DRW. If the calculated slip ratio is above a predetermined value, then the present condition is judged as slipping. As a result, the traction control unit 100 outputs a power control signal that corresponds to the slip ratio, and the engine control unit 60, in response to the power control signal, adjusts the opening θth of the throttle valve to a smaller predetermined value. This action reduces the power of the engine ENG and thereby the driving force being transmitted to the driving wheels DRW, minimizing the slippage at the driving wheels DRW. As the power of the engine ENG is made smaller, the engine rotational speed Ne declines correspondingly.

The traction control unit 100, while it is outputting the power control signal for controlling the power of the engine ENG, continually calculates the slip ratio at the driving wheels DRW from the detection signals received by the VSA control unit 80 for outputting another power control signal that corresponds to the slip ratio, to the engine control unit 60. In other words, the traction control unit 100 controls the power of the engine ENG by feedback of the slip ratio at the driving wheels DRW, so the power control signal output to the engine control unit 60 is set based on this feedback of the slip ratio, for making an appropriate adjustment in the power of the engine ENG.

Furthermore, if the result of the determination is that there is a slip at the driving wheels DRW, then the VSA control unit 80 outputs to the clutch control unit 70 a signal indicating that the power of the engine ENG is being controlled by the traction control unit 100. This signal is referred to as "TCS operation signal TCSon".

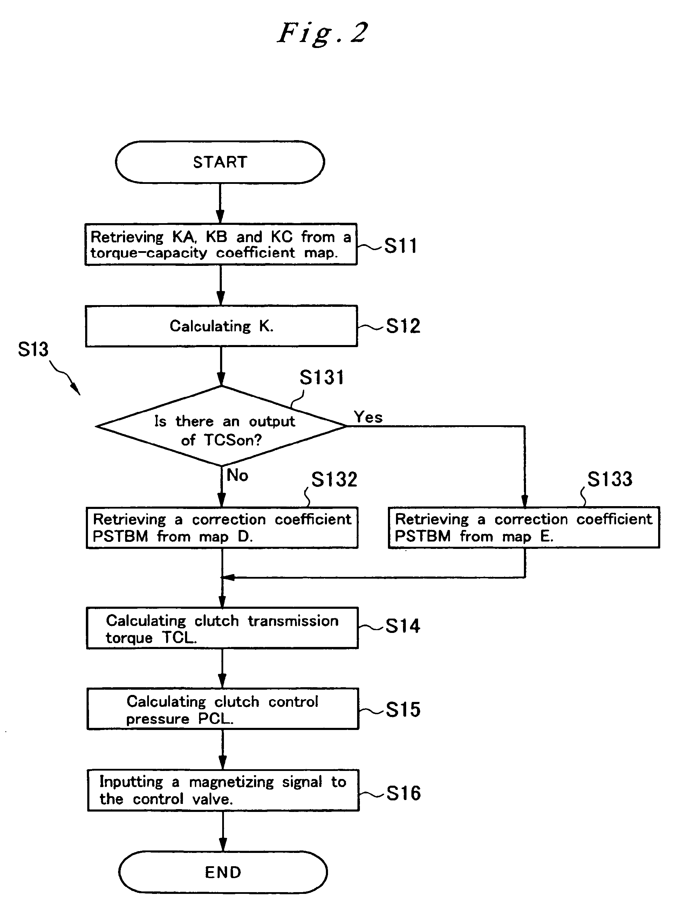

Now, the process executed by the clutch control unit 70 for controlling the engagement of the starting clutch is described in reference to the flowchart in FIG. 2. This process is repeated periodically (for example, every 10 msec.) and is executed during the start-up and travel of the vehicle while the shift lever (not shown) is set at D range.

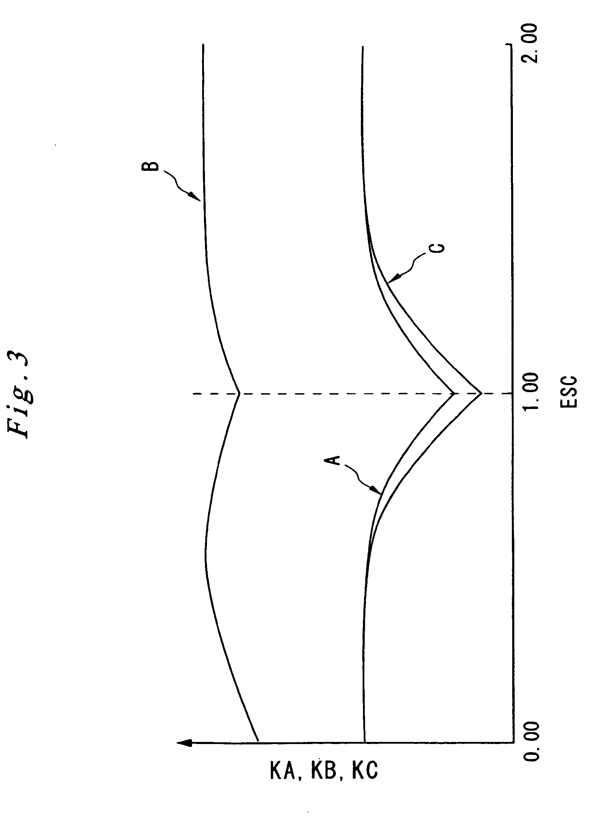

At first, from three torque-capacity coefficient maps stored in the memory means, torque-capacity coefficients KA, KB and KC, which correspond to the respective maps, are retrieved at step S11. As shown in FIG. 3, the torque-capacity coefficient maps A ~ C are two-dimensional maps plotting values for clutch speed ratio ECS along the horizontal axis and values for torque-capacity coefficients KA, KB and KC along the vertical axis. The coefficients KA, KB and KC are retrieved from the respective maps in correspondence to the clutch speed ratio ECS at the time of the execution of the process. Here, the clutch speed ratio ECS (Ndn/Ndr) is calculated by dividing the rotational speed Ndn of the driven pulley 26 by the rotational speed Ndr of the drive pulley 21.

From these torque-capacity coefficients KA, KB and KC, a final torque-capacity coefficient K is calculated by using a predetermined algorithm, which includes the opening of the throttle valve as a parameter, at step S12 . The process described in the flowchart provides the starting clutch 5 with the clutch control pressure PCL that is determined by applying as a parameter the final torque-capacity coefficient K, which is calculated by using such an algorithm. This process is repeated to determine and adjust the clutch control pressure PCL being supplied to the starting clutch 5 so that the starting clutch 5 can absorb a shock that may arise from a sudden change in the power of the engine ENG as the opening of the throttle valve changes rapidly. By this operation, no transmission of such a shock is allowed to the driving wheels DRW, so there is protection against drivability deterioration.

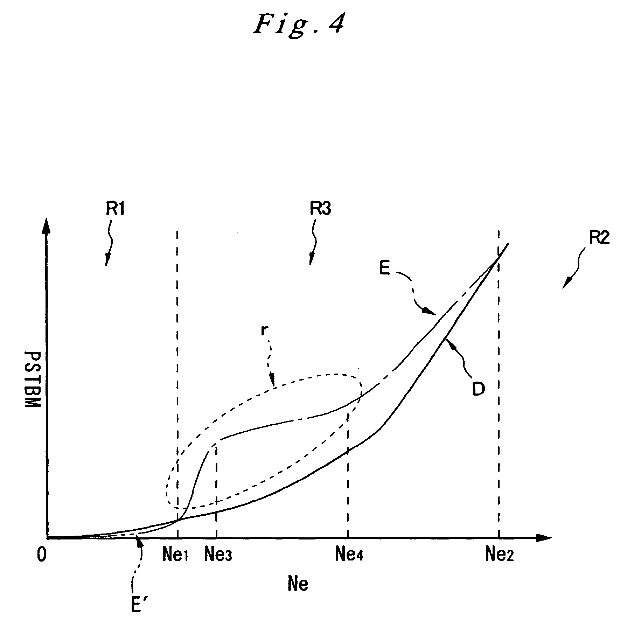

Next, a correction coefficient PSTBM is retrieved from a correction coefficient map stored in the memory means at step S13. At this step, a determination is made whether or not there is the presence of the TCS operation signal TCSon sent to the clutch control unit 70 at sub-step S131. If there is no TCS operation signal TCSon, or, in other words, if the traction control unit 100 has judged that there is no slip at the driving wheels DRW, which is normal condition, then the correction coefficient PSTBM is retrieved from a first correction coefficient map D, which is drawn in a solid line in FIG. 4, at sub-step S132. If there is an input of the TCS operation signal TCSon, or, in other words, if the traction control unit 100 has judged that there is a slip at the driving wheels DRW, which results in the control of the power of the engine ENG, then the correction coefficient PSTBM is retrieved from a second correction coefficient map E, which is drawn in an alternate long and short dash line in FIG. 4, at sub-step S133.

The first and second correction coefficient maps D and E are two-dimensional maps plotting values for the engine rotational speed Ne along the horizontal axis and values for the correction coefficient PSTBM along the vertical axis. The second correction coefficient map E overlaps the first correction coefficient map D in the region (first region R1: Ne ≤ Ne1) where the engine rotational speed Ne is lower than a first rotational speed Ne1 (for example, 1200 rpm) and also in the region (second region R2: Ne ≥ Ne2) where the engine rotational speed Ne is higher than a second rotational speed Ne2 (for example, 4000 rpm) . As a result, while the engine rotational speed Ne is in the first or second region R1 or R2, the correction coefficient PSTBM retrieved from the first correction coefficient map D is identical with that retrieved from the second correction coefficient map E for the same engine rotational speed Ne.

On the other hand, the second correction coefficient map E is plotted above the first correction coefficient map D in the region (third region R3: Ne1 < Ne < Ne2) where the engine rotational speed Ne is between the first rotational speed Ne1 and the second rotational speed Ne2. As a result, while the engine rotational speed Ne is in the third region R3, the correction coefficient PSTBM retrieved from the second correction coefficient map E has a value higher than that retrieved from the first correction coefficient map D for the same engine rotational speed Ne.

As the ellipse drawn in a broken line in FIG. 4 indicates, in the second correction coefficient map E in the third region R3, the correction coefficient PSTBM rises rapidly when the engine rotational speed Ne goes beyond the first rotational speed Ne1 until it reaches a third rotational speed Ne3 (for example, 1500 rpm), and then the correction coefficient PSTBM rises gradually as the engine rotational speed Ne increases to a fourth rotational speed Ne4 (for example, 2500 rpm). As a result, the difference between the correction coefficient PSTBM retrieved from the first correction coefficient map D and that retrieved from the second correction coefficient map E for the same engine rotational speed Ne is comparatively large while the engine rotational speed Ne is between the first rotational speed Ne1 and the fourth rotational speed Ne4. Moreover, the slope of the second correction coefficient map E is smaller than that of the first correction coefficient map D while the engine rotational speed Ne is between the third rotational speed Ne3 and the fourth rotational speed Ne4. In other words, as long as the engine rotational speed Ne fluctuates between the third rotational speed Ne3 and the fourth rotational speed Ne4 while there is an output of the TCS operation signal TCSon, the correction coefficient PSTBM is set not to fluctuate significantly notwithstanding the fluctuation of the engine rotational speed Ne.

After the retrieval of the correction coefficient at step S13, the clutch-transmission torque TCL is calculated at step S14 by using equation (1) below. This equation may be rearranged for calculating the clutch-transmission torque TCL at a gear ratio by multiplying the right side of the equation by the gear ratio.

$$TCL = K \times PSTBM \quad \ldots (1)$$

Then, the clutch control pressure PCL is calculated to correspond with the clutch-transmission torque TCL at step S15, and magnetizing signals are generated and sent to the solenoid of the control valve CV, so that the operation of the control valve CV is controlled to supply this calculated clutch control pressure PCL to the starting clutch 5 at step S16. Here, the larger the value for the clutch-transmission torque TCL, the larger the value for the clutch control pressure PCL resulting from the calculation.

It is clear from equation (1) that the larger the value for the correction coefficient PSTBM, the larger the value for the clutch-transmission torque TCL, thus increasing the clutch control pressure PCL, which results in a comparatively large engaging force of the starting clutch 5. Therefore, while the power of the engine ENG is being controlled by the traction control unit 100, and while the engine rotational speed Ne is in the third region R3, the clutch control unit 70 controls the engaging force of the starting clutch 5 to become larger than in normal condition. As a result, the power of the engine ENG, which is controlled through the power control signal being output by the traction control unit 100, is transmitted to the driving wheels DRW at a transmission ratio higher than in normal condition.

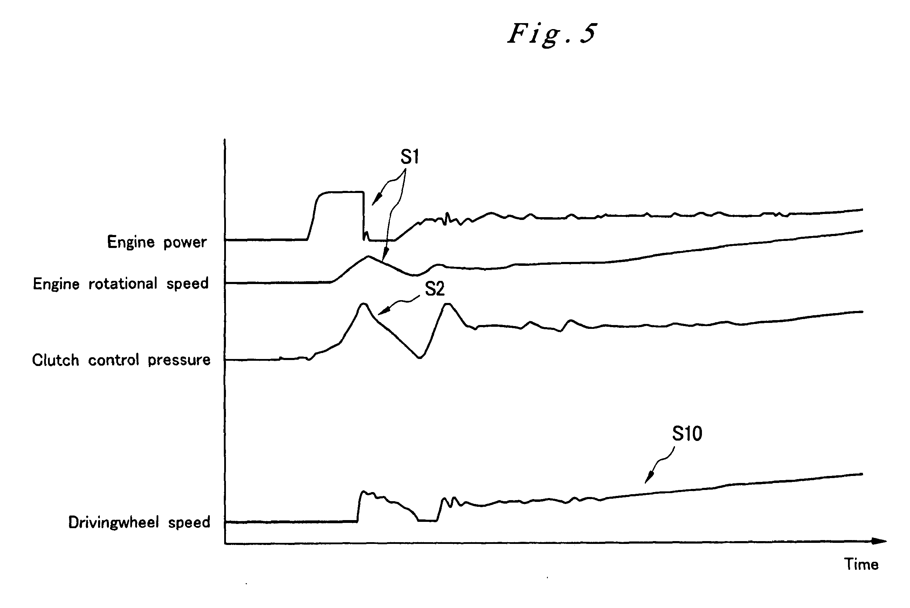

FIG. 5 is a timing chart showing some conditions during the start-up of the vehicle in the control being executed by the traction control unit 100 and the clutch control unit 70. As shown in FIG. 5, when the traction control unit 100 has judged that there is a slip at the driving wheels DRW, it executes the control for decreasing the power and the rotational speed Ne of the engine ENG by sending a power control signal to the engine control unit 60 (S1). The clutch control unit 70, which has received a TCS operation signal TCSon from the VSA control unit 80, retrieves a correction coefficient PSTBM from the second correction coefficient map E, where the correction coefficient PSTBM does not change rapidly but rather decreases gradually as long as the engine rotational speed Ne is decreasing in the region between the fourth rotational speed Ne4 and the third rotational speed Ne3 while it decreases as a result of the control of the power of the engine ENG executed by the traction control unit 100. Therefore, the starting clutch 5 maintains a relatively large engaging force and remains in engagement (S2), in spite of the decrease in the engine rotational speed Ne. As a result, the driving wheels DRW receive the power of the engine ENG being controlled by the traction control unit 100, at a comparatively high transmission ratio.

Furthermore, the traction control unit 100 controls the power of the engine ENG by feedback of the slippage condition at the driving wheels DRW, which are receiving the power. Even if there is a fluctuation again in the engine rotational speed Ne resulting from this control operation, the starting clutch 5 maintains a relatively large engaging force and remains in engagement as mentioned above because the correction coefficient PSTBM retrieved from the second correction coefficient map E does not change significantly with respect to the fluctuation of the engine rotational speed Ne.

As the power of the engine ENG is being controlled by the traction control unit 100, which maintains the condition where the power of the engine ENG is being transmitted to the driving wheels DRW at a comparatively high transmission ratio, the rotational speed of the driving wheels DRW becomes stable. This stability, in turn, stabilizes the acceleration (S10) for a smooth start-up.

As described above, the present embodiment comprises two maps for the retrieval of the correction coefficient PSTBM as a parameter for calculating the clutch control pressure PCL, and from these maps, the correction coefficient PSTBM is retrieved in accordance with the engine rotational speed Ne. Once the control of the power of the engine ENG by the traction control unit 100 is initiated, the TCS operation signal TCSon, which indicates the execution of the operation controlling the power of the engine ENG, is sent to the clutch control unit 70, which calculates the clutch control pressure PCL. The clutch control unit 70 selects one of the two maps, depending on whether the TCS operation signal TCSon is present or not, and retrieves the correction coefficient PSTBM from the selected map accordingly. Here, while the TCS operation signal TCSon is present, the correction coefficient PSTBM is retrieved from the second correction coefficient map E, whose values are set larger than those in the first correction coefficient map D for the same engine rotational speeds Ne.

As a result, while the control by the traction control unit 100 is being executed, the starting clutch 5 engages with an engaging force that is larger than in normal condition, so the power of the engine ENG, which is being adjusted by the traction control unit 100, is transmitted through the starting clutch 5 to the driving wheels DRW at a comparatively high transmission ratio. In this way, the power of the engine ENG is adjusted precisely for reducing the power at the driving wheels DRW, and this control surely results in elimination of the slippage.

Although the engine rotational speed Ne fluctuates because of the control operation by the traction control unit 100, the correction coefficient PSTBM in the second correction coefficient map E is set not to fluctuate significantly in response to the fluctuation of the engine rotational speed Ne. Therefore, even though the power of the engine ENG is being controlled by the traction control unit 100, the engaging force of the starting clutch 5 is maintained at a large value for keeping the transmission ratio of the power of the engine ENG at a high degree. This control surely reduces and eliminates the slippage at the driving wheels DRW.

Furthermore, the clutch control unit 70 controls the starting clutch 5 to engage with the same engaging force as in normal condition if the engine rotational speed Ne is in the first or second region R1 or R2 even while the power of the engine ENG is being controlled by the traction control unit 100. In this way, protection is provided against engine stall, which may arise otherwise because the starting clutch 5 has a relatively large engaging force while the engine rotational speed Ne is comparatively low in the first region R1.

In addition to the power control during the start-up of the vehicle, whose timing is charted in FIG. 5, the traction control unit 100 determines whether there is a slip at the driving wheels DRW also during the travel of the vehicle and controls the power of the engine ENG correspondingly to the slip ratio. In this case, the traction control unit 100 also sends the TCS operation signal TCSon to the clutch control unit 70 for the engaging control of the starting clutch according to the second correction coefficient map E. In this way, protection against slippage is provided also during the travel of the vehicle in the same way as during the start-up, which is shown in FIG. 5.

A vehicular control system according to the present invention is not limited to the above described embodiment. For example, the second correction coefficient map E' maybe set below the first correction coefficient map D in the first region R1 as shown in a two-dot chain line in FIG. 4, so that the correction coefficient PSTBM for the same engine rotational speed Ne is set smaller if the power is being controlled by the traction control unit 100 than if it is otherwise, i.e., if the power is not being controlled.

In this way, a reliable protection is provided against engine stall because the engaging force of the starting clutch 5 is adjusted smaller while the power of the engine ENG is being controlled by the traction control unit 100 and the engine rotational speed Ne is decreasing, even if there is a time lag between the generation of the magnetizing signal to the control valve CV and the reduction of the engaging force of the starting clutch 5 by the actual provision of the target clutch control pressure PCL to the starting clutch 5.

Moreover, the driving wheels DRW may be front wheels or rear wheels. In the above described embodiment, the vehicle is of two wheel drive, but it can be four wheel drive. In a four wheel drive vehicle, the VSA control unit 80 may be equipped with a unit that controls the distribution of the driving force and the braking force by adjusting the distribution ratio of the driving force being transmitted from the differential mechanism to the right and left wheels, for avoiding skidding, understeering and oversteering when the vehicle makes a turn. Furthermore, in the above embodiment, the prime mover comprises an electrical motor M, which assists the driving force of the engine. However, the present invention is not limited to this arrangement, and it can be applied in the same manner to vehicles equipped with other types of prime mover, for example, to automobiles that use compressed natural gas and to fuel cell automobiles and electric automobiles.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

RELATED APPLICATIONS

This application claims the priority of Japanese Patent Application No. 2005-229271 filed on August 8, 2005, which is incorporated herein by reference.

**Claims**

1. A vehicular control system comprising:

an engine (ENG);
a starting clutch (5), which is provided between said engine (ENG) and driving wheels (DRW) and is brought into engagement or disengagement;
clutch control means, which adjusts an engaging force of said starting clutch (5) in correspondence to a condition of a vehicle for controlling a ratio of a power transmission from said engine to said driving wheels (DRW); and
traction control means, which executes control operations for detecting a slip at said driving wheels (DRW) and for reducing the slippage by adjusting the power of said engine (ENG) in correspondence to a slip ratio detected;

wherein:

said clutch control means executes a control for setting the engaging force of said starting clutch (5) larger while said traction control means is controlling the power of said engine (ENG) than while it is not controlling the power of said engine (ENG);

**characterized in that**
said control for setting the engaging force of said starting clutch (5) larger by said clutch control means is executed if a rotational speed of said engine (ENG) is equal to or higher than a first predetermined rotational speed Ne1.

2. The vehicular control system as set forth in claim 1, wherein:

said control for setting the engaging force of said starting clutch (5) larger by said clutch control means is executed if the rotational speed of said engine (ENG) is below a second predetermined rotational speed Ne2 (note: Ne2 > Ne1).

3. The vehicular control system as set forth in any of the preceding claims , wherein:

said traction control means adjusts the power of said engine (ENG) by adjusting a throttle opening thereof.

**Patentansprüche**

1. Fahrzeugsteuersystem, umfassend:

einen Motor (ENG);
eine Anfahrkupplung (5), die zwischen dem Motor (ENG) und Antriebsrädern (DRW) bereitgestellt ist und ein- oder ausgerückt wird;
ein Kupplungssteuermittel, das eine Einrückkraft der Anfahrkupplung (5) in Übereinstimmung mit einem Fahrzeugzustand zur Steuerung eines Verhältnisses einer Kraftübertragung von dem Motor an die Antriebsräder (DRW) anpasst; und
ein Traktionssteuermittel, das Steueroperationen zur Detektion eines Schlupfs an den Antriebsrädern (DRW) und zur Verringerung des Schlupfs durch Anpassen der Kraft des Motors (ENG) in Übereinstimmung mit einem detektierten Schlupfverhältnis ausführt;

worin:

das Kupplungssteuermittel eine Steuerung zur höheren Einstellung der Einrückkraft der Anfahrkupplung (5) ausführt, während das Traktionssteuermittel die Kraft des Motors (ENG) steuert, als während es die Kraft des Motors (ENG) nicht steuert;

**dadurch gekennzeichnet, dass**
die Steuerung zur höheren Einstellung der Einrückkraft der Anfahrkupplung (5) durch das Kupplungssteuermittel ausgeführt wird, wenn eine Drehzahl des Motors (ENG) gleich oder größer als eine erste vorherbestimmte Drehzahl Ne1 ist.

2. Fahrzeugsteuersystem gemäß Anspruch 1, worin:

die Steuerung zur höheren Einstellung der Einrückkraft der Anfahrkupplung (5) durch das Kupplungssteuermittel ausgeführt wird, wenn die Drehzahl des Motors (ENG) unter einer zweiten vorherbestimmten Drehzahl Ne2 liegt (Anmerkung: Ne2 > Ne1).

3. Fahrzeugsteuersystem gemäß einem der vorhergehenden Ansprüche, worin:

das Traktionssteuermittel die Kraft des Motors (ENG) durch Einstellen einer Drosselöffnung davon anpasst.

**Revendications**

1. Système de commande de véhicule comprenant :

   un moteur (ENG) ;
   un embrayage de démarrage (5), disposé entre ledit moteur (ENG) et des roues motrices (DRW) et mis en prise ou désengagé ;
   un moyen de commande d'embrayage, ajustant une force de mise en prise dudit embrayage de démarrage (5) en correspondance avec une condition d'un véhicule pour commander un rapport d'une transmission de puissance dudit moteur auxdites roues motrices (DRW) ; et
   un moyen de commande de traction exécutant des opérations de commande pour détecter un patinage au niveau desdites roues motrices (DRW) et pour réduire le patinage en ajustant la puissance dudit moteur (ENG) en correspondance avec un rapport de patinage détecté ;

   dans lequel :

   ledit moyen de commande d'embrayage exécute une commande pour régler la force de mise en prise dudit embrayage de démarrage (5) à une valeur plus importante quand ledit moyen de commande de traction commande la puissance dudit moteur (ENG) que quand il ne commande pas la puissance dudit moteur (ENG) ;

   **caractérisé en ce que**
   ladite commande pour le réglage de la force de mise en prise dudit embrayage de démarrage (5) à une valeur plus importante par ledit moyen de commande d'embrayage est exécutée si une vitesse de rotation dudit moteur (ENG) est supérieure ou égale à une première vitesse de rotation prédéterminée Ne1.

2. Système de commande de véhicule selon la revendication 1, dans lequel :

   ladite commande pour le réglage de la force de la mise en prise dudit embrayage de démarrage (5) à une valeur plus importante par ledit moyen de commande d'embrayage est exécutée si la vitesse de rotation dudit moteur (ENG) est inférieure à une seconde vitesse de rotation prédéterminée Ne2 (note : Ne2 > Nel).

3. Système de commande de véhicule selon l'une quelconque des revendications précédentes, dans lequel :

   ledit moyen de commande de traction ajuste la puissance dudit moteur (ENG) en ajustant une ouverture de papillon des gaz de celui-ci.

# Fig. 1

## *Fig.2*

```
                    ┌─────────────────────┐
                    │        START        │
                    └─────────────────────┘
                              │
                              ▼
            ┌───────────────────────────────────┐
            │ Retrieving KA, KB and KC from a   │──S11
            │ torque-capacity coefficient map.  │
            └───────────────────────────────────┘
                              │
                              ▼
            ┌───────────────────────────────────┐
  S13       │          Calculating K.           │──S12
            └───────────────────────────────────┘
                              │
                              ▼         S131
                         ╱─────────╲
                        ╱  Is there  ╲   Yes
                       ╱  an output   ╲──────────────┐
                       ╲  of TCSon?   ╱              │
                        ╲            ╱               │
                         ╲─────────╱                │
                          │ No    S132              │   S133
                          ▼                         ▼
        ┌─────────────────────────────┐  ┌─────────────────────────────┐
        │ Retrieving a correction     │  │ Retrieving a correction     │
        │ coefficient PSTBM from map D.│  │ coefficient PSTBM from map E.│
        └─────────────────────────────┘  └─────────────────────────────┘
                          │                         │
                          │◄────────────────────────┘
                          ▼
            ┌───────────────────────────────────┐
            │ Calculating clutch transmission   │──S14
            │ torque TCL.                       │
            └───────────────────────────────────┘
                              │
                              ▼
            ┌───────────────────────────────────┐
            │ Calculating clutch control        │──S15
            │ pressure PCL.                     │
            └───────────────────────────────────┘
                              │
                              ▼
            ┌───────────────────────────────────┐
            │ Inputting a magnetizing signal to │──S16
            │ the control valve.                │
            └───────────────────────────────────┘
                              │
                              ▼
                    ┌─────────────────────┐
                    │         END         │
                    └─────────────────────┘
```

## Fig. 3

# Fig.4

*Fig. 5*

EP 1 752 331 B1

**REFERENCES CITED IN THE DESCRIPTION**

**Patent documents cited in the description**

- JP H10199896467 A
- EP 1270305 A2
- JP H9199772353 A
- JP 2005229271 A